# EUROPEAN PATENT APPLICATION

(11) **EP 1 775 396 A1**
(43) Date of publication of application: **18.04.2007**
(21) Application number: 05022219.9
(22) Date of filing: 12.10.2005
(51) Int. Cl.: E04B 1/35, E04B 1/344, E04H 9/14

(54) **Pneumatic method and system for rapid erection of constructible structures**

(71) Applicant: Bini, Dante, N., St. Helena CA 94574 (US)
(72) Inventor: Bini, Dante, N., St. Helena CA 94574 (US)
(74) Representative: Alagem Modiano, Lara S.

(57) **Abstract**

A building system with a preassembled ground-level modular structure for rapid erection of structures, particularly habitation, service or school structures (1), comprising a plurality of modular elements, which constitute the side walls (2) and the pitches (3) of the sloping roof of the structure, and a set of structures for support (4) and pivoted coupling to the ground, by means whereof the structure has no traditional foundations. The present invention also relates to a method for rapid, simple and consequently inexpensive self-erection of these structures which does not require specialized labor, the method being characterized in that it uses gas, typically air, for the rapid and simultaneous lifting of the modular elements that constitute the structure.

## Description

The present invention relates to a construction system with a ground-level preassembled modular components of partially prefabricated buildings, for the rapid erection of structures, particularly applicable for habitation, service or school structures, or obtained by means of the automatic and simultaneous lifting of the structural components that constitute the building.

In many cases there is a strongly felt need to be able to resort to structures that can be erected rapidly. Typical cases, for example, are situations when it is necessary to cope with environmental disasters such as earthquakes, violent atmospheric disturbances such as hurricanes, etc, which temporarily or permanently damage or completely destroy habitation, service or school structures, making them consequently unfit for use. As a consequence of these events, it is necessary to cope with the immediate demand for the availability of habitation, service or school structures, which must not only be built easily and be quick to assemble and erect, but must have components which can also be easily and inexpensively transported with the possibility to prearrange the connection of electrical, water and gas utilities, and which can be compared to permanent habitation structures in terms of size of the habitation spaces, quality of the construction and the possibility to customize the internal structures on the part of the inhabitants.

All these characteristics make these constructible modular structures suitable not only to cope with housing emergencies arising as a consequence of natural calamity situations but also extremely advantageous if it is necessary to provide temporary habitation, school or service centers on public or private ground. The structures to which reference is made are in fact well-suited to be provided as temporary structures, which can be disassembled and removed easily, and therefore their construction does not require particular building permits on the part of competent authorities, making it much easier to erect said structures in countries where these permits are granted with difficulty.

Among the known construction methods suitable for the purpose of erecting building structures of the type described so far rapidly, automatically and in an economically advantageous manner, systems are known which provide for the simultaneous lifting of modular elements to provide habitation, service or school units which comprise a floor, one or more side walls assembled onto said floor, and a roof formed by one or more pitches.

Italian patent application no. TV2004A000032 by the same Applicant discloses a mechanical method for rapid, automatic and simultaneous lifting of prefabricated modular components which constitute the peripheral walls and the pitches of the roof of a habitation structure of the type considered here, while the floor can be applied subsequently by means of prefabricated panels or by applying a thermally insulated flooring which is raised from the ground. In the method described in this document, a mechanical lifting system, for example a worm screw system, in fact allows automatic and simultaneous lifting of the various structures of the building.

However, some drawbacks have been observed in the described lifting method. In particular, the mechanical method has proved to be very effective but requires very precise control of the tolerances of all the components to be lifted and of all the lifting elements, in particular of the worm-screw mechanism that performs the simultaneous lifting of said prefabricated elements by means of traction cables supported by pulley-type sliding means. Moreover, the mechanical lifting system, in the final step of lifting, might not allow the tolerance required to facilitate the permanent fixing of the various components. This leads to a certain excessive rigidity in the provision of the system that performs lifting, since the dimensional and mutual positioning tolerances of the various elements must indeed be very precise, especially when a condition close to completion of assembly is reached and the pitches of the roof mate together.

The application of the concept of rapid pneumatic lifting of a prefabricated structure is disclosed in US patent 4,669,231 by the same Applicant. This US patent clearly illustrates examples of a different system for the ground-level assembly of all the modular components that form the habitation module and are therefore deemed here to be known in one of their possible embodiments. The structure is lifted by means of spherical inflatable elements, which are designed to raise the roof, which is provided as an already-assembled structure at ground level in a different configuration in order to be initially independent of the pitches, while the side walls are lifted in a known manner.

Moreover, the same Applicant developed years ago, and has been using for several years, in the field of engineering science, a rapid erection technique based on the use of pneumatic forms, known as pneumoforms, which are filled with gas, typically air, causing the rapid and simple lifting of the materials of the structure so as to cover and close the space. The term "pneumoform" has already been used by the same Applicant to describe these pneumatic flexible inflatable forms which allows rapid erection techniques, by means of which it has been possible to erect even large dome-shaped buildings made of reinforced concrete or ferro-cement (known as Binishells). These buildings can be seen all over the world, and the pneumatic rapid erection techniques are clearly illustrated by documents related to the execution of those projects. The Applicant himself in fact has been working for several years by performing the rapid erection of structures with a dome-shaped or barrel-vault covering, initially with a rounded base and then also with a square or rectangular base. The use of the air and of an inflatable form known as "pneumoform" to lift the covering structures made of reinforced concrete, ferro-cement or iron is therefore a technique that is already known and described in several patents by the same Applicant.

The pneumatic erection technique has achieved so far great successes in the erection of buildings having a dome-like or vault-like structure by using reinforced concrete and by using metallic tubular elements, whereas several difficulties have prevented up to now the use of these techniques also in the construction of traditional structures constituted by flat elements and
characterized not only by a square or rectangular base but especially by the fact that they are constituted by prefabricated structures, which can be transported easily and allow to erect buildings with a roof with sloping pitches that gives the structure not only all the advantages related to the possibility to drain rainwater from the roof but also a pleasant and traditional appearance.

The present invention provides a new method for the pneumatic, rapid, simultaneous and automatic lifting of the components of prefabricated modular buildings that solves the drawbacks noted above.

The aim of the present invention is to provide a preassembled system having a modular structure and a method for the rapid, simultaneous and automatic pneumatic assembly of the components of said preassembled system, in order to provide habitation, school or service structures.

Within this aim, an object of the present invention is to provide a system having a modular structure which can be assembled on-site by means of a simple, inexpensive, simultaneous and automatic pneumatic method for assembling the components, which does not require the use of specialized labor.

Another object of the present invention is to provide a system and a method for the simultaneous and automatic pneumatic assembly of the components of preassembled modular structures which allows to perform assembly even without using electric power.

Another object of the present invention is to provide a system having a modular structure and a method for the rapid, simultaneous and automatic pneumatic assembly of the components of said structure which allow reversibility of construction, i.e., allow an equally rapid pneumatic disassembly of the building.

Another object of the present invention is to provide a system having a modular structure for buildings that can be transported easily and folded easily once disassembled.

This aim and these and other objects, which will become better apparent hereinafter, are achieved by a preassembled system with modular structure for the pneumatic erection of structures, typically habitation or service or school structures, which comprises at least one ground support structure, at least one modular element being pivoted on said support structure and comprising a side wall and a roof pitch, which in turn is pivoted to said side wall, characterized in that it comprises lifting means for the pneumatic lifting of the habitation structure.

Further characteristics and advantages of the invention will become better apparent from the following description of a preferred but not exclusive embodiment of the system for rapid erection of preassembled structures of buildings according to the invention, illustrated by way of nonlimiting example with reference to the accompanying drawings, wherein:
Figure 1 is a perspective view of an example of an assembled habitation structure;
Figure 2 is a perspective view of the same habitation structure of Figure 1 during assembly;
Figure 3 is a transverse sectional view of the habitation structure during assembly;
Figure 4 is the same sectional view of Figure 3, in which the elements that constitute the side walls and the roof have reached their final position;
Figure 5 is a sectional view of the assembled habitation structure, separated from the ground and floating on a layer of water;
Figure 6 is a perspective view of the pneumoform in the inflated condition;

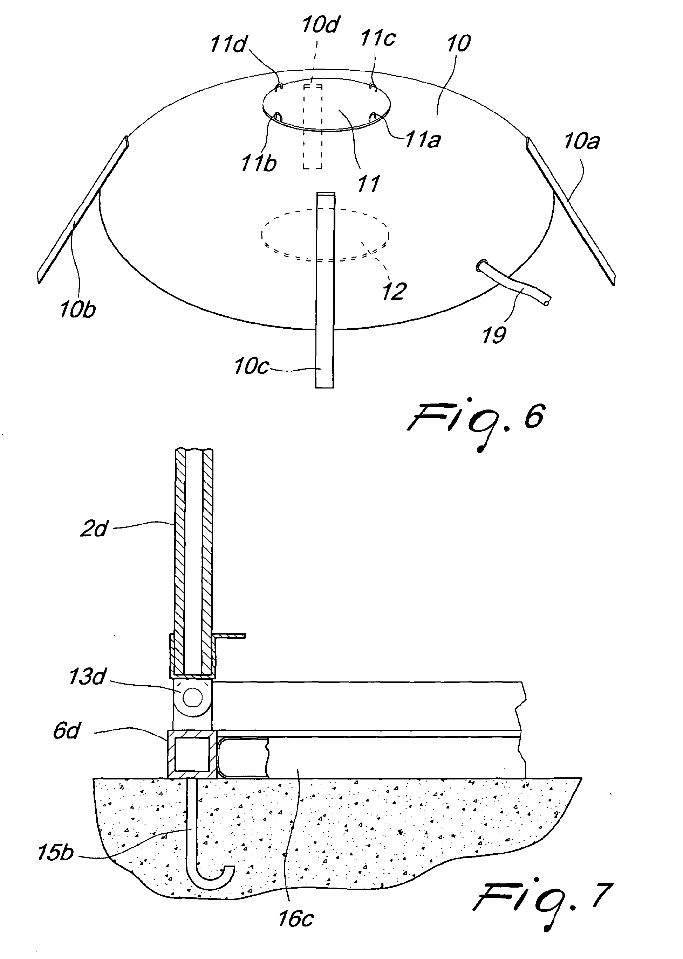

Figure 7 is an enlarged-scale view of a detail of the ground retention system of the exemplifying habitation structure.

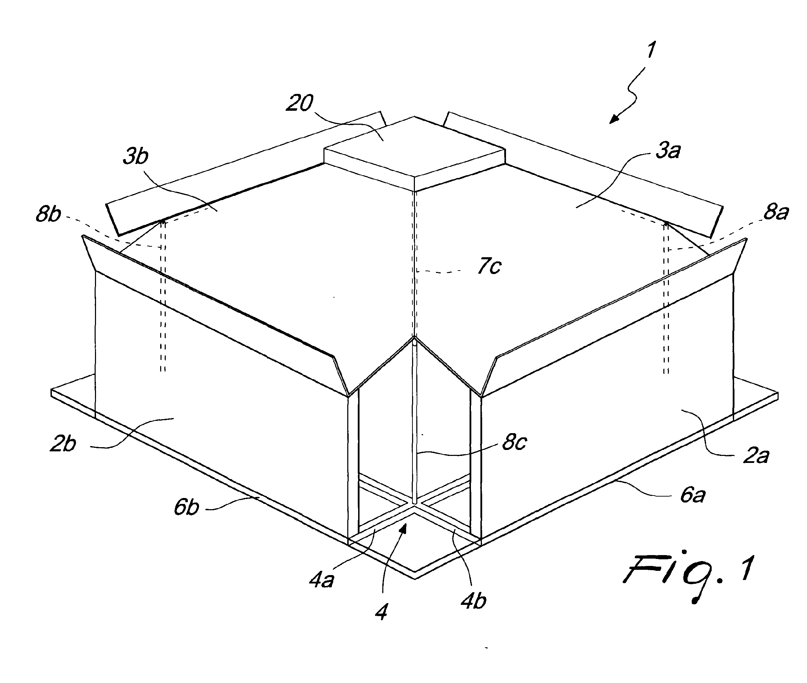

With reference to Figure 1, the habitation structure 1 illustrated by way of example can comprise a ground support structure 4, which can be formed for example by the substantially perpendicular intersection of two pairs of cross-members 4a, 4b, 4c, 4d, each pair being formed by two mutually parallel cross-members, peripheral elements 6a, 6b, 6c, 6d being further provided which again have a beam-like structure and close the structure by mutually connecting the free ends of each pair of parallel cross-members. In an alternative embodiment, the side walls 2a, 2b, 2c, 2d can be also connected directly to the ground by way of retention means, for example rings.

Again with reference to Figure 1, a typical habitation structure comprises side walls 2a, 2b, 2c, 2d and a structure which constitutes the roof and is composed of pitches 3a, 3b, 3c, 3d which have a substantially triangular or trapezoidal shape.

A possible alternative embodiment, not shown in the accompanying drawings, may comprise two rectangular pitches for forming the roof, two rectangular walls and two walls provided with triangular tympani.

In the case being considered here of preassembled habitation or service or school structures with modular components, the side walls and the pitches that constitute the roof are constituted for example in a known manner as disclosed in US patent 4,669,231 by the same Applicant. It is assumed, therefore, that the structure, the materials that can be used, and the construction methods both for the preassembled modules that constitute the side walls and for the modules that constitute the pitches of the roof are known and in any case are variable and changeable according to the requirements and to local regulations and conditions, and therefore a detailed description thereof is not given here.

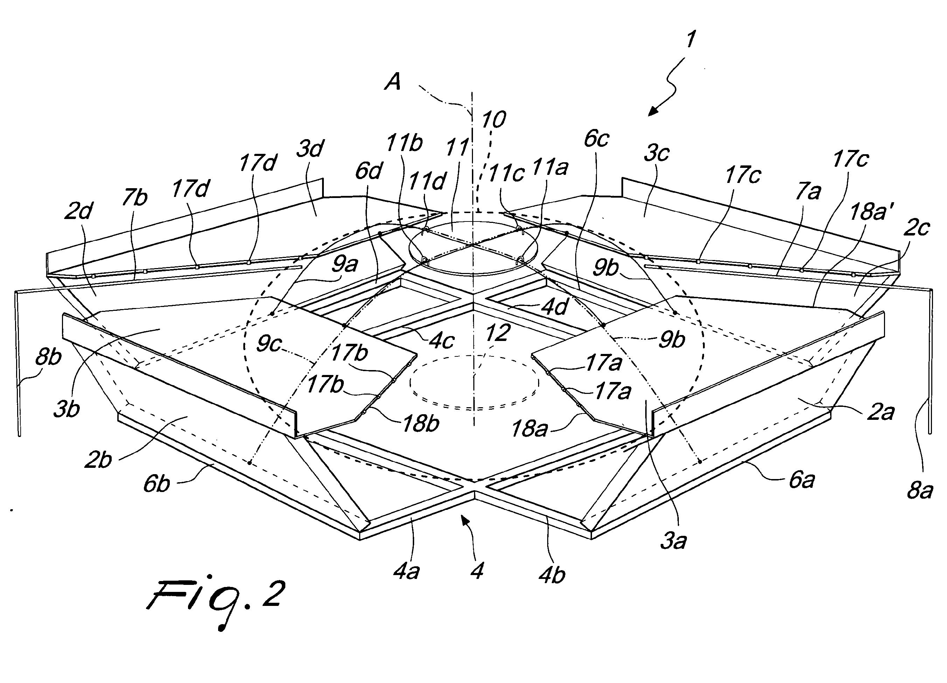

Figure 2 illustrates the structure of Figure 1 and some elements of the system for the rapid and simultaneous pneumatic erection of the habitation, service or school structure according to the present invention. The system according to the present invention is based on the use of a pneumoform 10, shown in Figure 2 in dashed lines in a partially inflated configuration. These drawings of course merely exemplify the content of the invention, and the shapes and proportions may vary with respect to what is shown here merely by way of example.

In the illustrated example, the habitation structure is composed of four modules, which constitute the side walls 2a, 2b, 2c, 2d, and a corresponding number of pitches 3a, 3b, 3c, 3d, which constitute the roof of the habitation, service or school structure. The optional ground support structure 4, formed by the cross-members 4a, 4b, 4c, 4d, 6a, 6b, 6c, 6d, provides one embodiment of a structure for the support and pivoting of the side walls.

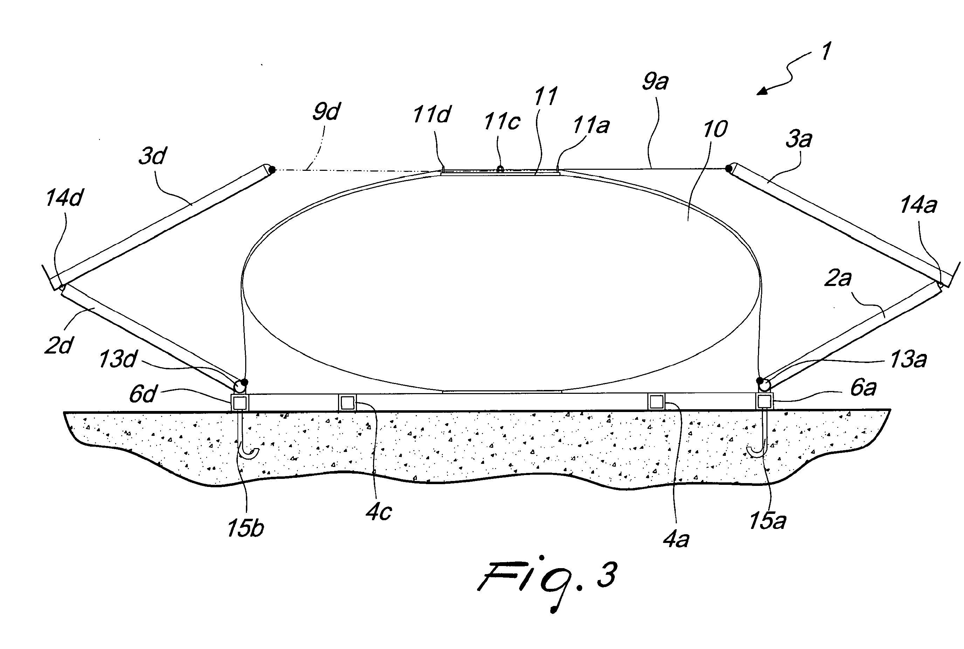

In particular, it is possible to use an articulated system for coupling the side wall to the ground support cross-member. This articulated system can be constituted for example by hinges, as shown in Figure 3 by means of the hinges 13a, 13d. Each side wall can be provided conveniently with one or more hinges, so as to ensure the necessary stability of the articulated coupling between said side wall and the cross-member of the supporting structure if said cross-members are provided.

Going back to the illustration of Figure 2, the pitches 3a, 3b, 3c, 3d that constitute the roof of the habitation structure are in turn pivoted in the upper part to said side walls. In particular, each side wall is connected articulately, i.e., by means of at least one hinge, to the respective pitch of the roof. Figure 3 illustrates, between the side walls 2a, 2d and the respective pitches of the roof 3a, 3d, hinges 14a, 14d, which are illustrated by way of example.

The pneumatic system according to the present invention comprises, as mentioned, a pneumoform 10. Said pneumoform, of which Figure 6 illustrates a preferred embodiment suitable for the rapid pneumatic lifting of habitation structures such as the one shown in Figures 1 and 2, is assumed to be known, since its applications up to now have been numerous, as mentioned. It is preferably made of reinforced PVC fabric, which can be commercially identified by means of the "type III" code, but the problem of using a pneumatic system for the simultaneous erection of all the wall and roof components of habitation, service or school structures of the type considered here had never been considered. In order to adapt the use of the pneumoform to the rapid pneumatic lifting of preassembled habitation, service or school structures having a square or rectangular base and
characterized by a roof with sloping pitches, certain refinements have been adopted which have allowed to optimize the placement and controlled inflation of the pneumoform. The pneumoform 10 is in fact preferably provided with lifting control means, which can be constituted for example by control bands 10a, 10b, 10c, 10d, preferably made of elastic fabric, which are arranged symmetrically in diametrically opposite points of the pneumoform 10, as shown in Figure 6. In view of the symmetrical shape of the habitation, service or school structure being considered here by way of example, the pneumoform 10 is arranged centrally within said structure, assembled at ground level, and is provided with means for anchoring to the ground. These ground anchoring means are arranged, in the case of the illustrated embodiment, substantially at the center of the pneumoform, which in this case has a substantially elliptical shape once it has been inflated. The ground fixing means are constituted, in the embodiment illustrated by way of example, by a lower reinforcement disk 12, provided for example with a ring for anchoring to the ground and arranged in a polar position on the lower surface of the pneumoform. Likewise, there is a preferably metallic upper disk 11, which is arranged on top of the pneumoform 10, again in a polar position, is stably applied to the surface at its upper pole, and is provided with at least four guiding rings 11 a, 11b, 11c, 11d, which are arranged symmetrically in diametrically opposite points of said disk.

A cable or tension member 9a, 9b, 9c, 9d is connected to each pitch 3a, 3b, 3c, 3d of the roof in a substantially central position of the upper end of said pitch that lies opposite the side that is connected to the side wall. The opposite end of each one of said cables or tension members is further structurally connected to the base of the side wall of the facing module. Thus, for example, the end of the pitch 3a is connected by means of the cable 9a, which starts preferably from its free end, substantially to the center of the base of the side wall 2d that faces it. Thisconfiguration is shown in Figure 2, which clearly illustrates all four cables.

Said cables are inserted in the rings 11 a, 11b, 11c, 11d of the upper disk 11 so that said rings guide the cables along their path.

Since each pitch 3a, 3b, 3c, 3d of the roof has, in the embodiment illustrated in the examples, a substantially triangular or trapezoidal shape, each pitch has a side that is adjacent to the corresponding side wall, a free end which lies opposite the side that is adjacent to and hinged to the side wall, and two sides which are oblique if the pitch is viewed in plan view. At each one of said oblique sides, in the assembled configuration, each pitch confines with the adjacent pitch. For example, the pitches 3a and 3b are adjacent, and therefore the oblique sides respectively 18a and 18b are adjacent, once the habitation, service or school unit has been assembled. Means for fixing the assembled configuration are provided on each one of the oblique sides 18 of each pitch. Said means for fixing the assembled configuration allow, after the pneumoform has been deflated, the modular elements to remain in the assembled configuration reached at the end of the inflation of the pneumoform. In the embodiment illustrated in the figures, said fixing means comprise structural fixing rings 17, which are conveniently arranged so as to be axially aligned when the modular elements are in the assembled configuration. For example, Figure 2 illustrates the fixing rings 17a and 17b, arranged respectively at the oblique sides 18a and 18b. Each pitch has said rings on both of its oblique sides. Thus, for example, on the oblique side 18a there are rings 17a and on the oblique side 18a' there are similar rings, not shown in the figure.

Once the pitches of the roof have been closed and therefore the rings have been aligned axially, it is possible to insert within said fixing rings 17 tubes or rods or the like 7. Said rods 7 are preferably four and can be further provided with an end, which is articulated so that it can be associated with an upright to be fixed vertically to the ground or to the foundation or floor structure.

The optional structure for ground support 4 and for supporting the habitation unit, which in the described example is formed by cross-members 4a, 4b, 4c, 4d, 6a, 6b, 6c, 6d, can be coupled to the ground by way of ground connection means 15. Said connection means 15 can provide a permanent or temporary connection. In the embodiment illustrated in the accompanying drawings, said ground connection means are constituted by hooks or stud bolts or the like 15a, 15b, which can be provided in a variable number and are arranged in appropriately chosen points of the supporting structure 4.

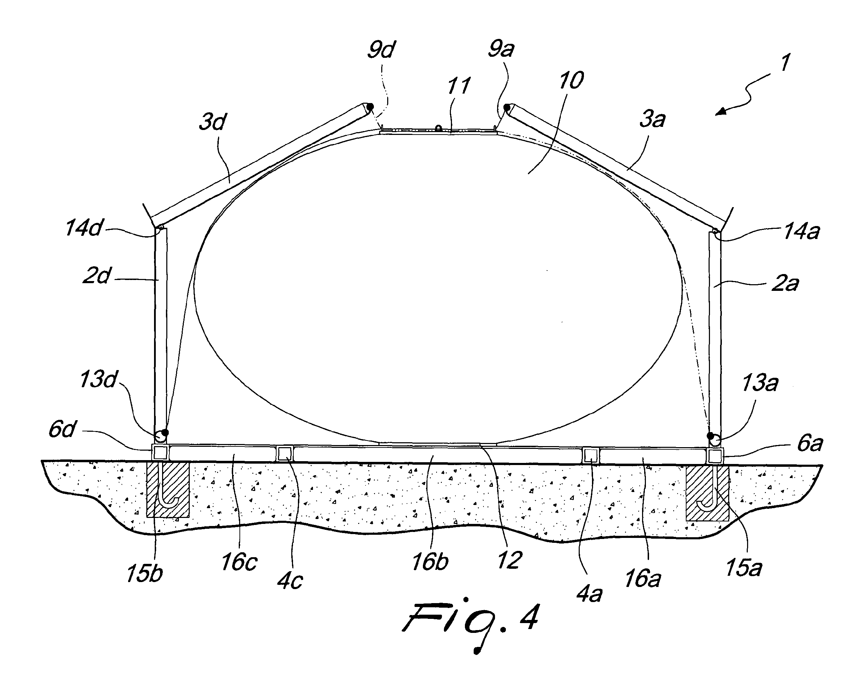

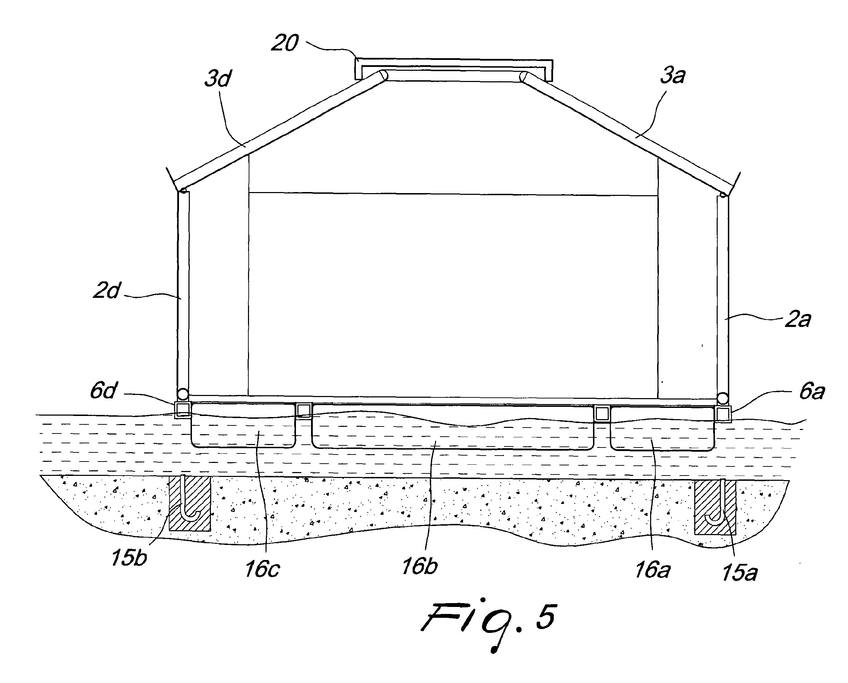

In one example of embodiment, inflatable elements 16a, 16b, 16c are further provided between the ground and the supporting structure 4, particularly at the peripheral sectors of the supporting structure 4 formed by the peripheral cross-members 6a, 6b, 6c, 6d and are visible for example in Figures 4 and 5. An inflatable element 16 is provided below each peripheral sector of the supporting structure. Said elements can be provided with actuation means and valves of a known type so that when necessary they can be inflated by the user or be self-inflating. For example, in the case of floods, said inflatable elements 16 inflate automatically upon contact with water by means of known devices of the type using a salt tablet.

Operation of the system for the rapid pneumatic erection of preassembled structures of buildings for habitation, service or school use described up to now is as follows.

Once the region where the habitation unit is to be erected has been identified, according to an embodiment which provides for the presence of a ground support structure 4, said ground support structure 4, formed by the cross-members 4a, 4b, 4c, 4d, is placed. In an alternative embodiment, not shown, the walls can be anchored directly to the ground by means of hinged hooks or other similar ground anchoring means. Once said structure has been rigidly coupled to the ground by means of the ground connection means 15, the pneumoform 10 is positioned by positioning and fixing to the ground the lower reinforcement disk 12 and the optional control bands 10a, 10b, 10c, 10d. Then the four peripheral modules, each comprising a side wall 2 and a covering element which constitutes a pitch 3 of the roof, are positioned on said ground support structure 4 or pivoted to the ground anchoring means or hooks mentioned above. The bottom side of the side wall 2 is pivoted to the corresponding peripheral cross-member element 6. After all four peripheral modules have been placed and pivoted to the peripheral elements 6 of the supporting structure 4, or pivoted to the eight hooks described above, it is possible to engage the connecting cables 9a, 9b, 9c, 9d. Each one of said cables, as described above, is connected at one end to a substantially central point of the end side of said pitch that lies opposite the side that is adjacent to the side wall and, at the other end, to a substantially central point of the bottom side of the side wall of the facing modular element.

Once connection of the cables has been completed, each module is connected to the facing module by means of two cables, of which one starts from the base of the wall element and one starts from the upper end of the pitch of the roof, as described. Said cables are inserted, during their assembly, in the guiding rings 11 a, 11b, 11c, 11d of the upper polar disk 11, which is rigidly coupled to the pneumoform, so that each cable can slide within the respective ring. Therefore, two laterally adjacent cables slide in opposite directions in each guiding ring. To prevent the two cables from making mutual contact, causing problems in terms of friction and wear thereof, each ring can be provided with a spacer, which prevents contact between the two cables. In practice, each ring can be divided into two openings by a spacer, or it is possible to provide two separate rings arranged side-by-side, or it is possible to fasten spring hooks to each ring, a cable sliding within each spring hook.

At this point, the gas, typically air, can be introduced in the pneumoform by means of an inflation and deflation valve 19, and the pneumoform can be inflated gradually. During the controlled inflation of the pneumoform, the cables are tensioned by the increase in volume of the pneumoform, as shown in Figures 3 and 4. The traction force applied by each cable to the free end of the pitch of the roof to which the cable is connected is such, in terms of direction and intensity, as to cause the simultaneous lifting of the four double modules, with simultaneous movement of the end of the pitches toward the central region of the structure, i.e., toward the vertical axis of symmetry (A) of the structure, which passes through the two polar disks of the pneumoform.

The lifting of the four double modules ends when the oblique sides 18 of adjacent pitches make mutual contact. An intermediate step and a final step of assembly, which illustrate how the modules rise simultaneously when the pneumoform is inflated, are shown respectively by Figure 3 and Figure 4, which also show how the cables 9 work.

When inflation of the pneumoform has been completed, the four modules are in their final configuration. The lifting of the structure has produced the contact of the oblique sides 18 of the adjacent pitches and therefore has aligned the fixing rings 17 arranged at said oblique sides 18. At this point, the erection of the habitation, service or school structure 1 is already complete and the configuration that has been reached is the final one. The additional step of stabilizing the structure consists in inserting tubes or rods 7 in said fixing rings 17. Said rods 7 are sized appropriately so as to withstand the shearing stresses that affect them. In the step for deflating the pneumoform, the modular elements would in fact tend to return to their initial collapsed position. The habitation, service or school structure, in other words, would tend to open out, each oblique side of each pitch tending to move away from the oblique side of the adjacent pitch. The tubes or rods 7 are therefore subjected to shearing stresses by the traction applied by the fixing rings.

As mentioned, the tubes or rods 7 can be provided conveniently with a free end 8, which is adapted to be coupled vertically to the ground, to the foundations or to the floor. Said free end 8 is conveniently connected or articulated with respect to the tube 7 so as to allow first of all easy insertion of said tube 7 in the fixing rings 17 and then the folding of said free end 8 until it assumes a substantially vertical position and is therefore rigidly coupled and in contact with respect to the ground, to the foundations or to the floor. In this manner, the tube or rod 7 remains stably inserted in the fixing rings 17 while the ground contact of the end 8, further contributes to give the entire structure greater structural stability and ensure the exact height from the floor of that corner.

As described earlier, the ground support structure 4 can be constituted by cross-members 4a, 4b, 4c, 4d, 6a, 6b, 6c, 6d. Inflatable elements 16 can be provided so that they are comprised between the ground and the peripheral cross-members 6a, 6b, 6c, 6d, one below each peripheral sector of the ground support structure. In this manner, in case of floods, said elements can be inflated by the user or can self-inflate, and the total volume of said elements is sized appropriately so as to ensure flotation of the entire habitation, service or school structure 1 by buoyancy.

The buoyancy applied by the inflatable elements 16 therefore tends to lift the habitation structure 1. The ground support structure 4, however, is rigidly coupled by the ground connection means 15, and therefore lifting is prevented. However, if a floating habitation structure is to be provided, said ground connection means are designed appropriately so as to break or open when the buoyancy reaches a preset value, which corresponds to the flotation condition.

In this manner, if a flood occurs, the habitation unit is free to float on the water, separating from the ground.

Moreover, a retention element, such as an appropriate spring steel cable or an elastic cable or the like, can be provided in order to prevent the habitation structure 1 from moving away from its original position by more than is appropriate and in an extreme case, in the case of an elastic cable, in order to return the structure 1 approximately to its initial position once flooding has ceased.

It has been found that the preassembled system and the method for the rapid pneumatic assembly of said preassembled system at ground level according to the present invention allow to eliminate the noted drawbacks and to improve known construction systems currently in use.

In particular, the preassembled system having a modular structure and the method for rapid pneumatic assembly and erection of this system according to the present invention provide a habitation, service or school structure that can be easily transported and stored in its disassembled configuration thanks to its compact dimensions. Moreover, the system according to the present invention can be assembled easily and rapidly by means of the pneumatic method to which the present invention also relates. The habitation structure according to the present invention is therefore suitable to be assembled without using specialized labor, rapidly and without having to provide foundations and without using electric power. Moreover, assembly is extremely safe, since the people assigned to assembly merely arrange the system before inflation of the pneumoform and their presence in the vicinity of the habitation structure during lifting is not necessary.

The person skilled in the art understands easily that the preassembled system having a modular structure for rapid pneumatic erection of habitation, service or school structures described above is susceptible of numerous modifications and variations, all of which are within the scope of the appended claims.

Therefore, the scope of the protection of the claims must not be limited by the illustrations or by the preferred embodiments given in the description by way of example, but rather the claims must comprise all the characteristics of patentable novelty that reside within the present invention, including all the characteristics that would be treated as equivalent by the person skilled in the art.

All the details may further be replaced with other technically equivalent elements, and the materials and dimensions may be various according to requirements, so long as they are suitable for the operation of the device as described.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A preassembled system with modular components for the erection of structures (1) comprising at least one ground support structure (4), at least one modular element being pivoted on said support structure (4) and comprising a side wall (2a) and a roof pitch (3a), which in turn is pivoted to said side wall (2a), **characterized in that** it comprises pneumatic lifting means (10).

2. The preassembled system for erecting structures (1) according to claim 1, **characterized in that** said pneumatic lifting means comprise at least one pneumoform (10), constituted by an inflatable balloon which has a substantially elliptical shape and by tension members (9), which are conveniently rigidly coupled to the elements (2, 3) of said modular elements and are slidingly coupled so as to pass above said pneumoform (10).

3. The preassembled system for erecting structures (1) according to claim 2, **characterized in that** said system has a substantially symmetrical configuration with respect to a substantially vertical central axis of symmetry (A), the system comprising at least four of said modular elements, each modular element being arranged at a side of said ground support structure (4), having any adapted shape, said modular elements facing each other in pairs.

4. The preassembled system for erecting structures (1) according to claim 3, **characterized in that** said pneumoform (10) has a substantially elliptical shape, with an upper pole and a lower pole, said pneumoform being arranged so that the axis of symmetry that passes through its poles coincides with the substantially vertical axis of symmetry (A) of the entire system

5. The preassembled system for erecting structures (1) according to claim 4, **characterized in that** each one of said tension members (9) is connected at one end to a point at the base of the side wall (2a) of a first modular element and, at the other end, to the pitch that covers the roof (3d) of the modular element that faces said first modular element, each one of said tension members passing above said pneumoform.

6. The preassembled system for erecting structures (1) according to claim 1, **characterized in that** said ground support structure (4) comprises at least four cross-members (4a, 4b, 4c, 4d), which are arranged so as to form a grid in which said cross-members are mutually parallel in pairs and each pair of cross-members crosses the other two cross-members substantially at right angles.

7. The preassembled system for erecting structures (1) according to claim 6, **characterized in that** said ground support structure (4) further comprises four peripheral cross-members (6a, 6b, 6c, 6d), which are adapted to connect the free ends of the cross-members (4) that are mutually parallel so as to form a substantially quadrangular closed lattice structure, said peripheral cross-members (6a, 6b, 6c, 6d) delimiting peripheral sectors of said ground support structure (4).

8. The preassembled system for erecting structures (1) according to claim 2, **characterized in that** said pneumoform (10) comprises, at the upper pole, an upper metallic disk (11) provided with at least one guiding ring (11a, 11b, 11c, 11d), which is adapted to slidingly retain at least one of said tension members (9) and, at the lower pole, a lower reinforcement disk (12), which is provided with a system for fixing said pneumoform (10) to the ground.

9. The preassembled system for erecting structures (1) according to any one of the preceding claims, **characterized in that** each pitch (3) is constituted at least by one side which is adjacent to the corresponding side wall (2) to which it is pivoted, a free end which is shaped in any manner, and at least one oblique side (18) on which there are fixing means suitable to fix one pitch to the adjacent pitch when the system is in the assembled configuration.

10. The preassembled system for erecting structures (1) according to claim 9, **characterized in that** said means for fixing the adjacent pitches (3) comprise fixing rings (17), which are arranged at the oblique sides (18) of the pitches (3), so that in an assembled configuration the rings of adjacent pitches are axially aligned.

11. The preassembled system for erecting structures (1) according to claim 10, **characterized in that** said means for fixing the adjacent pitches (3) further comprise tubes or rods (7), which are adapted to be inserted in said fixing rings (17) when said pitches (3) are in the assembled configuration, so as to prevent the mutual spacing of two pitches that are adjacent in the assembled configuration.

12. The preassembled system for erecting structures (1) according to claim 11, **characterized in that** said tubes or rods (7) further have an articulated end, which is adapted to be structurally connected with respect to the part of the tube or rod (7) that is inserted in said fixing rings (17), so that said tube (7) can be arranged in structural contact with the ground by means of vertical supporting beam.

13. The preassembled system for erecting structures (1) according to any one of the preceding claims, **characterized in that** inflatable elements (16) are further provided between the ground and said ground support structure (4) and are rigidly coupled to said ground support structure (4).

14. The preassembled system for erecting structures (1) according to claim 13, **characterized in that** said inflatable elements (16) are arranged at peripheral regions of said ground support structure (4) and engineered to be able to sustain the entire weight of the habitation, service or school structure.

15. The preassembled system for erecting structures (1) according to any one of the preceding claims, **characterized in that** said ground support structure (4) further comprises means (15) for connection to the ground.

16. The preassembled system for erecting structures (1) according to claim 15, **characterized in that** said ground connection means (15) provide a detachable connection, said connection means (15) being sized appropriately so as to disengage the habitation, service or school structure (1) from the ground in case of flotation of said habitation, service or school structure (1).

17. A method for the rapid construction of a preassembled system having a modular structure for erecting structures (1), comprising the steps of:
a) preassembling at least one modular element, which comprises a side wall (2) and a roof pitch (3), which is pivoted to said side wall (2);
b) providing and arranging on the ground a ground support structure (4);
c) arranging appropriately on said ground support structure (4) a pneumoform (10) having appropriate dimensions;
d) rigidly coupling said pneumoform (10) to the ground by way of ground fixing means (11);
e) rigidly coupling, by means of at least one hinge (13), the side wall (2) of said modular element to said ground support structure (4);
f) arranging at least one tension element (9) so that one end is rigidly coupled to the pitch (3) of the roof of said modular element, passing said tension member (9) over the pneumoform (10), and rigidly coupling the other end to a fixed point;
g) introducing air in the pneumoform (10), making the pneumoform assume the final fully inflated configuration according to appropriately preset volume parameters;
h) after the modular element has reached its final position, rigidly coupling said modular element by way of suitable fixing means so that it remains in the final position, which corresponds to the assembled structure;
i) deflating the pneumoform;
1) removing said at least one tension element and the pneumoform.

18. The method for rapid erection of a preassembled system having a modular structure for erecting structures (1) according to claim 17, **characterized in that** said modular elements are at least two and are arranged in front of each other, the step f) being constituted by:
- arranging at least two tension members (9) so that each one has an end rigidly coupled to the base of the side wall (2) of one of said at least two modular elements and the other end is rigidly coupled to the pitch (3) of the roof of the other modular element that faces the first one, taking care to pass each one of said tension members (9) above the pneumoform (10).

19. The method for the rapid erection of a preassembled system having a modular structure for erecting structures (1) according to claim 18, **characterized in that** said modular elements are four, are arranged symmetrically with respect to a substantially vertical central symmetry axis (A) of the structure, and **in that** said roof pitches (3) have oblique sides (18), so that when the inflation of the pneumoform (10) has been completed, the oblique sides (18) of the pitches (3) of adjacent modular elements mutually mate.

20. The method for erecting habitation, service or school structures (1) according to claim 19, **characterized in that** said fixing means (17) consist of fixing rings (17) conveniently provided on said oblique sides (18) of each pitch (3), so that step h) of the method comprises the additional step of axially aligning said fixing rings (17) and subsequently the additional step of inserting tubes or rods (7) in said fixing rings so as to stabilize the habitation structure (1) in the assembled configuration.

21. The method for erecting habitation, service or school structures (1) according to any one of claims 17 to 19, **characterized in that** step f) provides for the additional step of passing said tension members (9) within guiding rings (11a, 11b, 11c, 11d) provided on an upper metallic disk (11) arranged at the upper pole of said pneumoform (10).
